# EUROPEAN PATENT SPECIFICATION

(11) **EP 2 219 384 B1**
(45) Date of publication and mention of the grant of the patent: **25.12.2019**
(21) Application number: 08853087.8
(22) Date of filing: 18.11.2008
(51) Int. Cl.: H04Q 9/00, F24F 11/30, H04L 12/24, F24F 11/00, F24F 11/62

(54) **EQUIPMENT ITEM DEVICE, MANAGEMENT DEVICE, EQUIPMENT ITEM MANAGEMENT SYSTEM, COMMUNICATION CONTROL METHOD BETWEEN EQUIPMENT AND MANAGEMENT DEVICE**
GERÄTEPOSTENEINRICHTUNG, VERWALTUNGSEINRICHTUNG, GERÄTEPOSTENVERWALTUNGSSYSTEM, KOMMUNIKATIONSSTEUERVERFAHREN ZWISCHEN GERÄTEN UND VERWALTUNGSEINRICHTUNG
DISPOSITIF D'ÉLÉMENT D'ÉQUIPEMENT, DISPOSITIF DE GESTION, SYSTÈME DE GESTION D'ÉLÉMENT D'ÉQUIPEMENT, PROCÉDÉ DE COMMANDE DE COMMUNICATION ENTRE ÉQUIPEMENT ET DISPOSITIF DE GESTION

(30) Priority: 21.11.2007 JP 2007302241
(43) Date of publication of application: 18.08.2010
(73) Proprietor: Daikin Industries, Ltd., Osaka 530-8323 (JP)
(72) Inventor: KAWAI, Seiji, Kusatsu-shi Shiga 525-8526 (JP)
(74) Representative: Goddar, Heinz J.
(86) International application number: PCT/JP2008/070886
(87) International publication number: WO 2009/066643

(56) References cited:
- EP-A2- 0 605 772
- JP-A- 5 210 692
- JP-A- 2000 266 390
- JP-A- 2003 004 281
- JP-B2- 3 379 357
- US-A1- 2006 259 784

## Description

The present invention relates to a device for an equipment apparatus, a management apparatus, an equipment apparatus management system, a method for controlling communication between an equipment apparatus and a management apparatus.

### BACKGROUND ART

The equipment apparatuses, installed in plural sites, have been conventionally connected to and remote-controlled by a management center through an external network (see e.g., Patent Document 1).

### <Patent Document 1>

Japan Laid-open Patent Application Publication No. JP-A-2004-005496
Patent document EP 0605772A2 discloses a management apparatus with address setting and notification information for a plurality of equipment apparatuses through a network.

### DISCLOSURE OF THE INVENTION

### <Technical Problem>

When the equipment apparatuses are respectively installed in user sites and then connected to the network, they are allowed to communicate with the management center. The management center subsequently executes processing of registering the respective installed equipment apparatuses for identifying them. For example, each of the equipment apparatuses is registered through a test run.

On the other hand, each of the equipment apparatuses is configured to transmit a set of individual device information to the management center after being allowed to communicate with the management center, even if having not been registered yet. Note the process of transmitting a set of individual device information to the management center is hereinafter referred to as "notification". The notification will be retried until being successfully done.

Therefore, the management center is supposed to receive notifications from unregistered equipment apparatuses after the equipment apparatuses are installed and connected to the network until test runs are performed. However, the management center cannot identify each of the unregistered equipment apparatuses. Therefore, the management center sends responses for notifying failure of transmission of notification to the unregistered equipment apparatuses. In response to such a response, each of the unregistered equipment apparatuses retries notifications to the management center. Consequently, unnecessary network traffic is generated between the management center and the equipment apparatuses.

In view of the above, the present invention aims to inhibit the unnecessary network traffic in the equipment apparatus management system. This is achieved with a management apparatus according to claim 1, devices communicating with the management apparatus according to claims 5 and 7 and a corresponding communication control method according to claim 10. Further preferred embodiments of the invention are disclosed by the dependent claims.

### <Solution to Problem>

A management apparatus according to a first aspect of the present invention relates to a management apparatus configured to manage a plurality of equipment apparatuses through a network. The management apparatus includes a notification receiver section, a storage section, a registration determiner section, a notification prevention command creator section, and a command transmitter section. The notification receiver section is configured to receive a notification from each of the equipment apparatuses. The storage section is configured to store a plurality of sets of identification information of the respective equipment apparatuses and a plurality of sets of registration information of the respective equipment apparatuses for indicating a registered/unregistered status of each of the equipment apparatuses. The registration determiner section is configured to determine the registered/unregistered status of each of the equipment apparatuses with reference to a corresponding set of identification information and a corresponding set of registration information when the notification receiver section receives the notification from each of the equipment devices. The notification prevention command creator section is configured to create a notification prevention command when the registration determiner section has determined that each of the equipment apparatuses has the unregistered status. The command transmitter section is configured to transmit the notification prevention command to each of the equipment apparatuses.

The management apparatus herein receives the notification from each of the equipment apparatuses and/or sends a response to each of the equipment apparatuses. Each of the equipment apparatuses herein includes a device (e.g., an adaptor device) built in a part of each of the equipment apparatuses or a device that is installed as an individual device separate from each of the equipment apparatuses and connected to each of the equipment apparatuses.

According to the management apparatus of the first aspect of the present invention, unnecessary network traffic can be eliminated between the management apparatus and each of the equipment apparatuses by inhibiting transmission of the notification from each of the unregistered equipment apparatuses.

A management apparatus according to a second aspect of the present invention relates to the management apparatus of the first aspect of the present invention. The management apparatus further includes a second storage section and a notification prevention state determiner section. The second storage section is configured to store a plurality of sets of notification prevention information of the respective equipment apparatuses for indicating whether or not each of the equipment apparatuses is in a notification prevention state. The notification prevention state determiner section is configured to determine whether or not each of the equipment apparatuses is in the notification prevention state with reference to a corresponding set of the notification prevention information and update the corresponding set of the notification prevention information based on a result of the determination.

According to the management apparatus of the second aspect of the present invention, the management apparatus can update a status of each equipment apparatus (i.e., information regarding whether or not each equipment apparatus is in the notification prevention state) as needed.

A management apparatus according to a third aspect of the present invention relates to the management apparatus according to the first aspect of the present invention. The management apparatus further includes a cancellation command creator section. The cancellation command creator section is configured to create a cancellation command for cancelling the notification prevention state of each of the equipment apparatuses when the notification receiver section receives a second notification. Further, the command transmitter section is configured to transmit the cancellation command to each of the equipment apparatuses.

The term "second notification" herein refers to, for instance, a notification to be forcibly transmitted from each of the equipment apparatuses that is currently in the notification prevention state.

According to the management apparatus of the third aspect of the present invention, the equipment apparatus that is currently in the notification prevention state will promptly return to be in a notification allowance state.

A management apparatus according to a fourth aspect of the present invention relates to the management apparatus according to the first aspect of the present invention. The management apparatus further includes a cancellation command creator section. The cancellation command creator section is configured to create a cancellation command for cancelling the notification prevention state of each of the equipment apparatuses when the registration determiner section has determined that each of the equipment apparatuses has the registered status and simultaneously when the notification prevention state determiner section has determined that each of the equipment apparatuses is in the notification prevention state. Further, the command transmitter section is configured to transmit the cancellation command to each of the equipment apparatuses.

According to the management apparatus of the fourth aspect of the present invention, each of the equipment apparatuses that is currently in the notification prevention state will promptly return to be in the notification allowance state.

A device for an equipment apparatus according to a fifth aspect of the present invention is connected to the equipment apparatus and configured to communicate with a management apparatus through a network. The device includes a command receiver section, a notification transmitter section, and a notification prevention executer section. The command receiver section is configured to receive a command from the management apparatus. The notification transmitter section is configured to transmit a notification to the management apparatus at a predetermined time interval. The notification prevention executer section is configured to prevent the notification transmitter section from transmitting the notification to the management apparatus in response to the command from the management apparatus.

The device for an equipment apparatus that is connected to the equipment apparatus herein also refers to a device (e.g., an adaptor device) built in a part of each of the equipment apparatuses or a device that is installed as an individual device separate from each of the equipment apparatuses and connected to each of the equipment apparatuses.

A device for an equipment apparatus according to a sixth aspect of the present invention relates to the device for an equipment apparatus according to the fifth aspect of the present invention. The device further includes a notification prevention canceller section. The notification prevention canceller section is configured to cancel a state of the notification prevention executed by the notification prevention executer section when a predetermined period of time is elapsed.

According to the device for an equipment apparatus of the sixth aspect of the present invention, the notification prevention state is cancelled when a predetermined period of time is elapsed. Therefore, even if the notification prevention state is continued by mistake, it is possible to reliably change the notification prevention state into the notification allowance state.

A device for an equipment apparatus according to a seventh aspect of the present invention is connected to the equipment apparatus and configured to communicate with a management apparatus through a network. The device includes a command receiver section, a notification prevention executer section, a notification prevention canceller section, and a notification transmitter section. The command receiver section is configured to receive a command from the management apparatus. The notification prevention executer section is configured to prevent a notification from being transmitted to the management apparatus. The notification prevention canceller section is configured to cancel a notification prevention state executed by the notification prevention executer section in response to the command from the management apparatus. The notification transmitter section is configured to transmit the notification to the management apparatus.

A device for an equipment apparatus according to an eighth aspect of the present invention relates to the device for an equipment apparatus according to one of the fifth and seventh aspects of the present invention. In the device, the command receiver section is configured to receive a command from a test-run program for each of the equipment apparatuses. Further, the notification transmitter section is configured to forcibly transmit a second notification to the management apparatus in response to the command from the test-run program.

According to the device for an equipment apparatus of the eighth aspect, the equipment apparatus that is currently in the notification prevention state after a test run is executed will promptly return to be in the notification allowance state.

An equipment apparatus management system according to a ninth aspect of the present invention includes the device for an equipment apparatus according to one of the fifth and seventh aspects, the management apparatus according to the first aspect, which is configured to communicate with the device for an equipment apparatus through the network, the equipment apparatus connected to the device for an equipment apparatus, and the network.

A communication control method according to a tenth aspect of the present invention is a method for controlling communication between a management apparatus and a plurality of devices for an equipment apparatus. The management apparatus is herein configured to manage a plurality of equipment apparatuses through a network. The devices are respectively connected to the equipment apparatuses and configured to communicate with the management apparatus. The communication control method includes a notification transmission step, a notification receipt step, a registration determination step, a notification prevention command creation step, a command transmission step, a command receipt step, and a notification prevention step. In the notification transmission step, each of the devices transmits a notification to the management apparatus at a predetermined time interval. In the notification receipt step, the management apparatus receives the notification from each of the devices. In the registration determination step, the management apparatus determines a registered/unregistered status of each of the equipment apparatuses with reference to a plurality of sets of preliminarily stored identification information of the respective equipment apparatuses and a plurality of sets of preliminarily stored registration information of the respective equipment apparatuses for indicating the registered/unregistered status of each of the equipment apparatuses when the management apparatus receives the notification. In the notification prevention command creation step, the management apparatus creates a notification prevention command when the management apparatus has determined that each of the equipment apparatuses has the unregistered status. In the command transmission step, the management apparatus transmits the notification prevention command to each of the devices. In the command receipt step, each of the devices receives the notification prevention command from the management apparatus. In the notification prevention step, each of the devices prevents transmission of the notification when each of the devices receives the notification prevention command.

### <Advantageous Effects of Invention>

According to the present invention, unnecessary network traffic can be eliminated in the equipment apparatus management system.

### BRIEF DESCRIPTION OF THE DRAWINGS

FIG.1 is a schematic illustration of an air-conditioning management system according to an exemplary embodiment of the present invention.
FIG2 is a configuration diagram of the air-conditioning management system according to the exemplary embodiment of the present invention.
FIG.3 is a flowchart for illustrating a flow of processing to be executed by a management apparatus according to the exemplary embodiment of the preset invention.
FIG.4 is a configuration diagram of an air-conditioning management system according to a modification of the exemplary embodiment of the present invention.
FIG.5 is a flowchart for illustrating a flow of processing to be executed by the air-conditioning management system according to the modification of the exemplary embodiment of the present invention.
FIG.6 is a configuration diagram of an adaptor device according to another modification of the exemplary embodiment of the present invention.
FIG7 is a flowchart for illustrating a flow of processing to be executed by the adaptor devices according to the foregoing another modification of the exemplary embodiment of the present invention.

### EXPLANATION OF THE REFERENCE NUMERALS

- 1: Air-conditioning management system (Equipment apparatus management system)
- 10: Management apparatus
- 11: Notification receiver section
- 12: Storage section
- 13: Registration determiner section
- 14: Notification prevention command creator section
- 15: Notification prevention state determiner section
- 16: Cancellation command creator section
- 19: Command transmitter section
- 20: Adaptor device (Device for equipment apparatus)
- 21: Command receiver section
- 22: Memory
- 23: Notification executer section
- 24: Notification prevention executer section
- 25: Canceller section
- 26: Timer
- 30: PC
- 31: Test-run program
- 40: Air conditioner (Equipment apparatus)
- 50: Network

### BEST MODE FOR CARRYING OUT THE INVENTION

### 1. Exemplary Embodiment

### 1.1. Schematic Configuration of Air-conditioning System

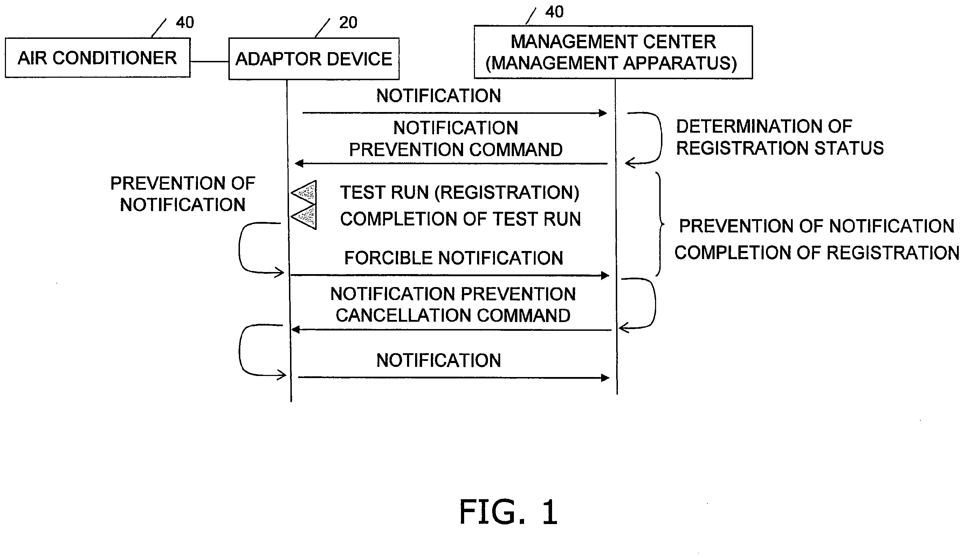

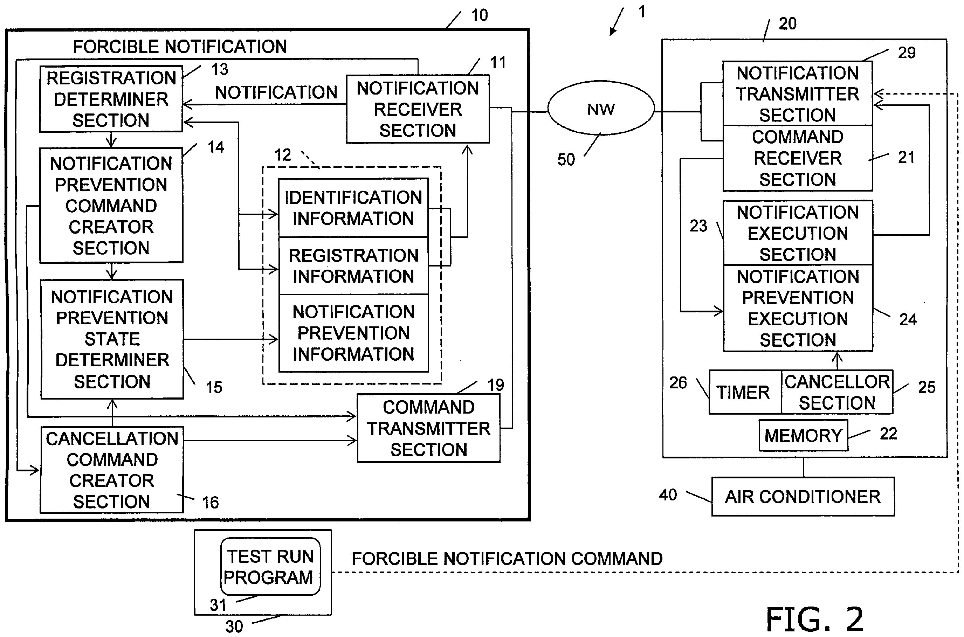

FIG.1 is an outline drawing for illustrating a flow of processing to be executed by an air-conditioning control system 1 according to an exemplary embodiment of the present invention. FIG.2 is a schematic diagram of entirety of the air-conditioning management system 1 according to the exemplary embodiment of the present invention. As illustrated in FIGS. 1 and 2, the air-conditioning management system 1 is mainly composed of an air conditioner 40, an adaptor device 20, and a management apparatus 10. The air conditioner 40 (e.g., an indoor unit or an outdoor unit) is an example of an equipment apparatus to be installed in the inside of a building. The adaptor device 20 is mounted to the air conditioner 40. The management apparatus 10 is installed in a remote management center while being allowed to communicate with the adaptor device 20 through a network 50. The external network (e.g., Internet) and the internal network (e.g., LAN) are herein classified as the network 50. Although not illustrated in the figures, the management apparatus 10 is configured to manage plural air conditioners 40 installed in plural remote buildings through the network 50.

In the air-conditioning management system 1, the adaptor device 20 is installed together with the air conditioner 40 and is then connected to the network 50. After being connected to the network 50, the adaptor device 20 is allowed to communicate with the management apparatus 10 in the management center and then starts transmitting a notification.

For example, the notification is a set of configuration information of the air conditioner 40, a set of information of the adaptor device 20, or a set of operation information of the air conditioner 40. The notification thus includes a set of information necessary for managing and monitoring the air conditioner 40.

As illustrated in FIG1, when receiving the notification from the adaptor device 20, the management apparatus 10 determines whether or not the air conditioner 40, connected to the adaptor device 20, has been already registered or has got a registered status in the management apparatus 10. This process is referred to as "registration determination". When determining that the air conditioner 40 has not been registered yet or has got an unregistered status the management apparatus 10 transmits a notification prevention command to the adaptor device 20. When receiving the notification prevention command, the adaptor device 20 stops transmitting the notification to the management apparatus 10.

Subsequently, the air conditioner 40 gets a registered status in the management apparatus 10 through a test run or the like. In this phase, the adaptor device 20 in a notification prevention state forcibly transmits the notification to the management apparatus 10. When receiving the forcible notification, the management apparatus 10 transmits a notification prevention cancellation command to the adaptor device 20. The notification prevention state of the adaptor device 20 is cancelled by the notification prevention cancellation command. The adaptor device 20 accordingly resumes the notification. When receiving the notification, the management apparatus 10 executes the registration determination as described above. Consequently, the management apparatus 10 determines that the air conditioner 40 has been already registered, and receives the notification as a valid notification.

It should be noted that the adaptor device 20 and the air conditioner 40 are included in the internal network structured inside a building. From the perspective of security and the like, connection is established between the adaptor device 20 and the management apparatus 10 when the adaptor device 20 transmits a connection request to the management apparatus 10 and then the management apparatus 10 responds to the request.

### 1.2 Management Apparatus

FIG.2 is a schematic diagram of entirety of the air-conditioning management system 1 according to the exemplary embodiment, which illustrates configurations of the management apparatus 10 and the adaptor device 20.

The management apparatus 10 includes a notification receiver section 11, a storage section 12, a registration determiner section 13, a notification prevention command creator section 14, a notification prevention state determiner section 15, and a cancellation command creator section 16.

The notification receiver section 11 is configured to receive the notification transmitted from the adaptor device 20 through the network 50. For example, the notification may be a normal notification or a forcible notification. The normal notification is, for instance, a set of configuration information of the air conditioner 40, a set of information of the adaptor device 20, or a set of operational information of the air conditioner 40, whereas the forcible notification is a set of information to be forcibly transmitted from the adaptor device 20 in the notification prevention state as described below. When the notification is a forcible notification, the notification receiver section 11 specifies the air conditioner 40, related to the forcible notification, with reference to the plural sets of identification information of the air conditioners 40 and the plural sets of registration information of the air conditioners 40. Then, the notification receiver section 11 creates a cancellation command for the specified air conditioner 40 as described below.

The storage section 12 is configured to store the plural sets of identification information, the plural sets of registration information, and the plural sets of notification prevention information. Each set of identification information is a set of information for identifying each of the air conditioners 40 (e.g., MAC address). Each set of registration information is a set of information indicating whether or not each of the air conditioners 40 has been already registered in the management apparatus 10. Further, each set of the registration information includes user information and administrator information of each of the air conditioners 40. Registration of each of the air conditioners 40 is executed through a test run as described below. The notification prevention state determiner section 15 indicates, by setting/unsetting a flag, whether or not the adaptor device 20 is currently set to be in the notification prevention.

When receiving the normal notification from the notification receiver section 11, the registration determiner section 13 is configured to specify the air conditioner 40, related to the normal notification, with reference to the plural sets of identification information and the plural sets of registration information, both of which are stored in the storage section 12. Further, the registration determiner section 13 determines whether or not the specified air conditioner 40 has been already registered in the management apparatus 10.

The notification prevention command creator section 14 is configured to create a notification prevention command when the registration determiner section 13 determines that the specified air conditioner 40 has not been registered yet. The notification prevention command includes a notice of notification failure to be transmitted to the adaptor device 20 and a command for setting the adaptor device 20 to be in the notification prevention state.

The notification prevention state determiner section 15 is configured to determine whether or not the adaptor device 20 is in the notification prevention state in response to creation of the notification prevention command. Then, the notification prevention state determiner section 15 is configured to update the corresponding set of the notification prevention information stored in the storage section 12 depending on the result of the determination. Specifically, when the adaptor device 20 is in the notification prevention state based on the set of the notification prevention information (e.g., a flag is set for the notification prevention information), the notification prevention information is not required to be updated. Accordingly, the notification prevention state determiner section 15 does not update the notification prevention information. On the other hand, when the adaptor device 20 is not in the notification prevention state (e.g., a flag is unset for the notification prevention information), the notification prevention state determiner section 15 updates the notification prevention information by setting the flag for the notification prevention information. Further, the notification prevention state determiner section 15 is configured to update the notification prevention information in response to creation of a cancellation command by the cancellation command creator section 16 described below. Specifically, when a flag is being set for the notification prevention information, the notification prevention state determiner section 15 updates the notification prevention information by unsetting the flag.

When receiving the forcible notification from the notification receiver section 11, the cancellation command creator section 16 is configured to create a command for cancelling the notification prevention state of the adaptor device 20.

A command transmitter section 19 is configured to transmit a notification prevention command created by the notification prevention command creator section 14 and a cancellation command created by the cancellation command creator section 16 to the adaptor device 20 as a response to the notification from the adaptor device 20.

It should be noted that the management apparatus 10 has the following exemplary hardware configuration. The storage section 12 is a memory. The notification receiver section 11, the registration determiner section 13, the notification prevention command creator section 14, the notification prevention state determiner section 15, the cancellation command creator section 16, and the command transmitter section 19 are constructed such that their processes are carried out by CPU executing controls and computations in accordance with a predetermined program installed in the memory.

### 1.3. Adaptor Apparatus

The adaptor device 20 is connected to the air conditioner 40 or attached to the interior of the air conditioner 40. The adaptor device 20 has a notification function, i.e., a function of transmitting a set of information of the air conditioner 40 to the management apparatus 10.

The adaptor device 20 includes a command receiver section 21, a memory 22, a notification executer section 23, a notification prevention executer section 24, a canceller section 25, a timer 26, and a notification transmitter section 29.

The command receiver section 21 is configured to receive a command transmitted from the management apparatus 10 through the network 50.

The notification executer section 23 is configured to create the normal notification from the set of information obtained from the air conditioner 40. The notification prevention executer section 24 is configured to prevent creation of the normal notification when receiving the notification prevention command via the command receiver section 21. The canceller section 25 is configured to cancel the normal notification prevention state executed by the notification prevention executer section 24. The timer 26 herein counts a period of time while the notification prevention state is being executed. The canceller section 25 is configured to automatically cancel the notification prevention state when a predetermined period of time is elapsed (e.g., after 24 hours).

The notification transmitter section 29 is configured to transmit the normal notification created by the notification executer section 23 to the management apparatus 10.

It should be noted that the command receiver section 21, the notification executer section 23, the notification prevention executer section 24, the canceller section 25, the timer 26, and the notification transmitter section 29 are, for instance, constructed such that their processes are carried out by CPU executes controls and computations in accordance with a predetermined program installed in the memory 22.

### 1.4. Test-run Program

A test-run program 31 is installed and activated in a PC 30 (terminal computer) connected to the adaptor device 20. A test run of the air conditioner 40 is executed in response to running of the test-run program 31.

Further, the test-run program is configured to access the management apparatus 10 through the PC 30. Accordingly, registration processing is executed for the air conditioner 40. After the air conditioner 40 is registered, the test-run program 31 gives the adaptor device 20 a command to transmit the forcible notification. The adaptor device 20 in the notification prevention state forcibly transmits the notification to the management apparatus 10 in response to the command (transmission of the forcible notification). More specifically, the adaptor device 20 in the notification prevention state accesses the management apparatus 10 in response to the command from the test-run program 31 to obtain a command from the management apparatus 10. The adaptor device 20 then transmits the forcible notification to the management apparatus 10 in response to the command obtained by accessing the management apparatus 10.

It should be noted that the test-run program 31 is not necessarily installed in the PC 30. For example, a test-run program may be used while being installed in the management apparatus 10 or any other external devices.

### 1.5. Processing of Air-Conditioning Management System

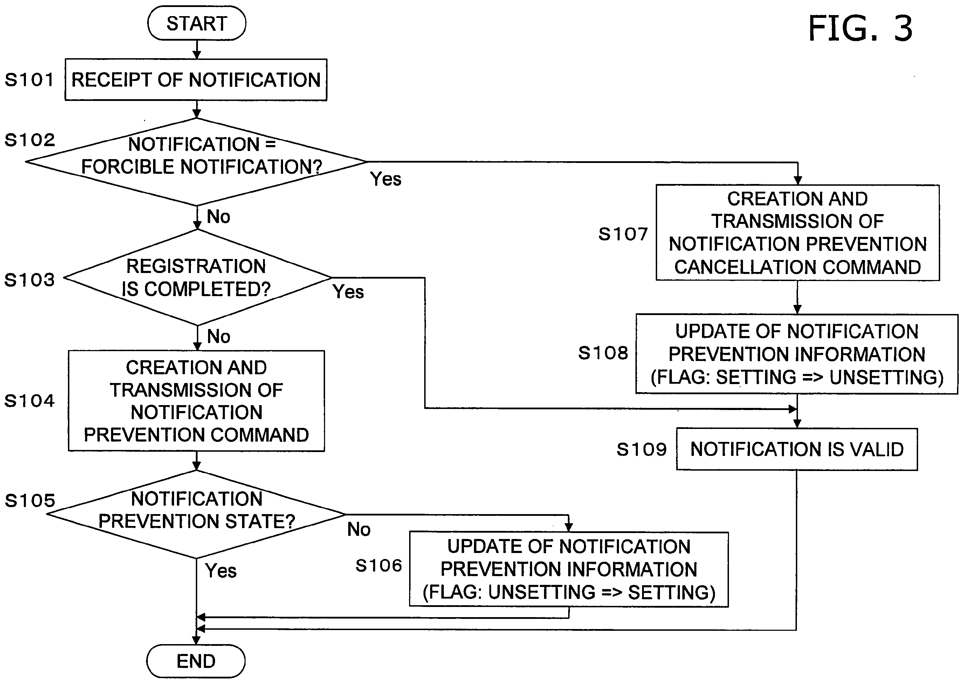

FIG.3 is a flowchart for showing a series of steps of processing mainly executed by the management apparatus 10 according to the exemplary embodiment.

Step S101: The notification receiver section 11 receives a notification from the adaptor device 20.

Step S102: The notification receiver section 11 determines a type of the received notification (i.e., the forcible notification or the normal notification). The processing proceeds to Step S107 when the notification receiver section 11 has determined that the received notification is a forcible notification. On the other hand, the processing proceeds to Step S103 when the notification receiver section 11 has determined that the received notification is a normal notification.

Step S103: The registration determiner section 13 determines whether or not the air conditioner 40, paired with the adaptor device 20 having transmitted the normal notification, has been already registered in the management apparatus 10. The processing proceeds to Step S109 when the registration determiner section 13 has determined that the air conditioner 40 has been registered in the management apparatus 10. On the other hand, the processing proceeds to Step S104 when the registration determiner section 13 has determined that the air conditioner 40 has not been registered in the management apparatus 10.

Step S104: The notification prevention command creator section 14 creates a notification prevention command in response to the determination result that the air conditioner 40 has not been registered in the management apparatus 10. Further, the command transmitter section 19 transmits the notification prevention command to the adaptor device 20 as a response to the normal notification.

Step S105: In response to creation of the notification prevention command, the notification prevention state determiner section 15 determines whether or not the adaptor device 20 is currently set to be in the notification prevention state with reference to a corresponding one of the plural sets of notification prevention information stored in the storage section 12. The processing is then finished when the notification prevention state determiner section 15 has determined that the adaptor device 20 is currently in the notification prevention state. On the other hand, the processing proceeds to Step S106 when the notification prevention state determiner section 15 has determined that the adaptor device 20 is not currently in the notification prevention state.

Step S106: The notification prevention state determiner section 15 updates the notification prevention information in accordance with the determination result. Specifically, the adaptor device 20 is herein required to be in the notification prevention state. Therefore, the notification prevention state determiner section 15 updates the notification prevention information by setting a flag for the notification prevention information.

Step S107: When the notification receiver section 11 has determined that the received notification is the forcible notification in Step S102, the cancellation command creator section 16 creates a command for cancelling the notification prevention state of the adaptor device 20. Further, the command transmitter section 19 transmits the cancellation command to the adaptor device 20 as a response to the forcible notification.

Step S108: The notification prevention state determiner section 15 updates the notification prevention information. Specifically, when a flag is being set for the notification prevention information, the notification prevention state determiner section 15 updates the notification prevention information by unsetting the flag.

Step S109: The management apparatus 10 processes the notification as valid when the air conditioner 40, paired with the adaptor device 20 having transmitted the notification in Step S103, has been already registered, or when the notification receiver section 11 has determined that the received notification is a forcible notification in Step S102.

Note the foregoing processing is only an example and the processing steps are not limited to the above.

### 1.6. Advantageous Effects of Present Exemplary Embodiment

According to the air-conditioning management system 1 of the present exemplary embodiment, notification to the management apparatus 10 is inhibited when the air conditioner 40 that is installed has not been registered in the management apparatus 10. Therefore, unnecessary network traffic can be eliminated between the management apparatus 10 and the adaptor device 20 paired with the air conditioner 40.

Further, the management apparatus 10 creates the notification prevention cancellation command and transmits it to the adaptor device 20 when receiving the forcible notification from the adaptor device 20. Therefore, notification of the adaptor device 20 is quickly and easily resumed.

Yet further, the adaptor device 20 cancels the notification prevention state when a predetermined period of time is elapsed. Therefore, even if the notification prevention state of the adaptor device 20 is continued by mistake, the adaptor device 20 is reliably returned to be in a notification allowance state.

### 2. Modifications

### 2.1. Modification 1

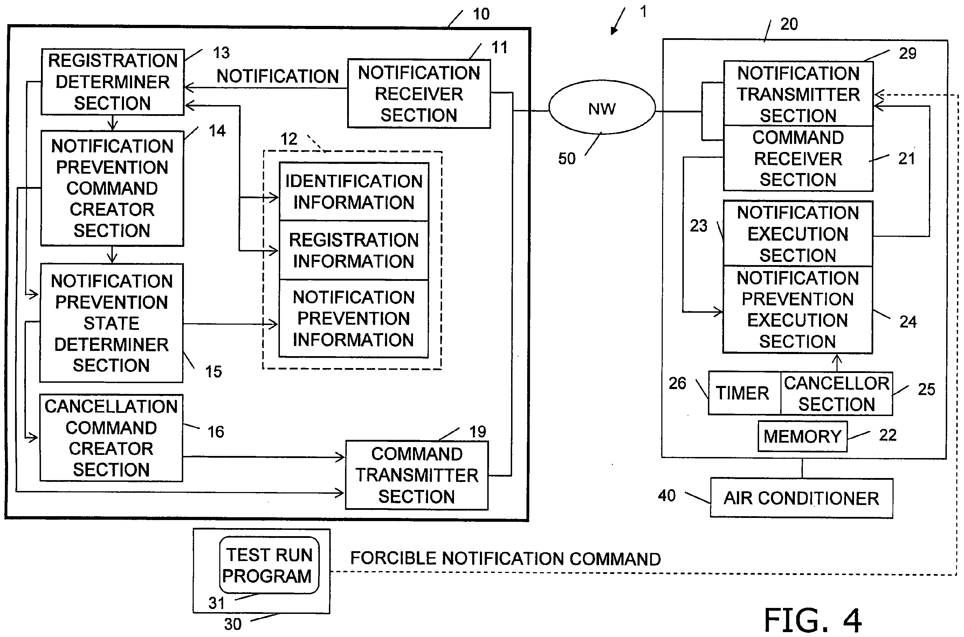

In the foregoing exemplary embodiment, when receiving a notification, the notification receiver section 11 of the management apparatus 10 performs a determination processing whether it is a forcible notification or a normal notification. Alternatively, for all the notifications received by the notification receiver section 11, the registration determiner section 13 may determine whether or not the air conditioner 40 has been already registered, as illustrated in FIG4.

As described above, registration of the air conditioner 40 is completed through the test-run program 31 installed in the PC 30. Therefore, the management apparatus 10 does not firstly determine whether or not the notification is a forcible notification, but determines whether or not the air conditioner 40 has been already registered. When the air conditioner 40 has been already registered and further the adaptor device 20, paired with the air conditioner 40, is currently in the notification prevention state, it is possible to determine that the notification prevention state should be cancelled.

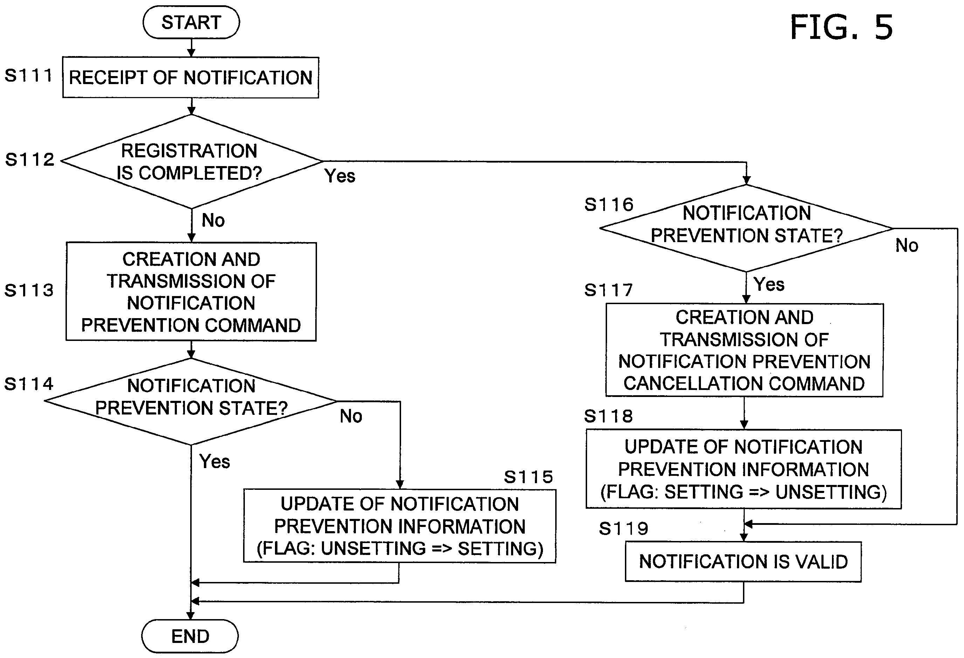

FIG.5 shows a flow of the processing to be executed in the modification 1.

Step Sill: The notification receiver section 11 receives a notification from the adaptor device 20.

Step S112: The registration determiner section 13 determines whether or not the air conditioner 40, paired with the adaptor device 20 having transmitted the notification, has been already registered in the management apparatus 10. The processing then proceeds to Step S116 when the registration determiner section 13 has determined that the air conditioner 40 has been already registered in the management apparatus 10. On the other hand, the processing proceeds to Step S113 when the registration determiner section 13 has determined that the air conditioner 40 has not been registered in the management apparatus 10.

Step S113 : The notification prevention command creator section 14 creates a notification prevention command in response to the determination result that the air conditioner 40 has not been registered in the management apparatus 10. Further, the command transmitter section 19 transmits the notification prevention command to the adaptor device 20 as a response to the notification.

Step S114: In response to creation of the notification prevention command, the notification prevention state determiner section 15 determines whether or not the adaptor device 20 is currently in the notification prevention state with reference to a corresponding one of the sets of notification prevention information stored in the storage section 12. The processing is then finished when the notification prevention state determiner section 15 has determined that the adaptor device 20 is currently in the notification prevention state. On the other hand, the processing proceeds to Step S115 when the notification prevention state determiner section 15 has determined that the adaptor device 20 is not in the notification prevention state.

Step S115: The notification prevention state determiner section 15 updates the notification prevention information in accordance with the determination result. Specifically, the notification prevention state determiner section 15 updates the notification prevention information by setting a flag for the notification prevention information, because the adaptor device 20 should be set to be in the notification prevention state.

Step S116: When the registration determiner section 13 has determined that the air conditioner 40, paired with the adaptor device 20 having transmitted the notification, has been already registered in the management apparatus 10, the notification prevention state determiner section 15 determines whether or not a flag is set for the notification prevention information with reference to a corresponding one of the sets of notification prevention information stored in the storage section 12. The processing then proceeds to Step S117 when the notification prevention state determiner section 15 has determined that the flag is set for the notification prevention information. On the other hand, the processing proceeds to Step S119 when the notification prevention state determiner section 15 has determined that the flag is unset for the notification prevention information.

Step S117: When the adaptor device 20 is currently in the notification prevention state (i.e., when the flag is set for the notification prevention information), the cancellation command creator section 16 creates a notification prevention cancellation command. The notification prevention cancellation command is transmitted, as a response to the notification, to the adaptor device 20 through the command transmitter section 19.

Step S118: The notification prevention state determiner section 15 updates the notification prevention information. Specifically, when the flag is set for the notification prevention information, the notification prevention state determiner section 15 updates the notification prevention information by unsetting the flag.

Step S119: The management apparatus 10 processes the notification as valid.

Note the foregoing processing is only an example and therefore the processing steps are not limited to the above.

The present modification can achieve the same advantageous effects as those achieved by the foregoing exemplary embodiment.

### 2.2. Modification 2

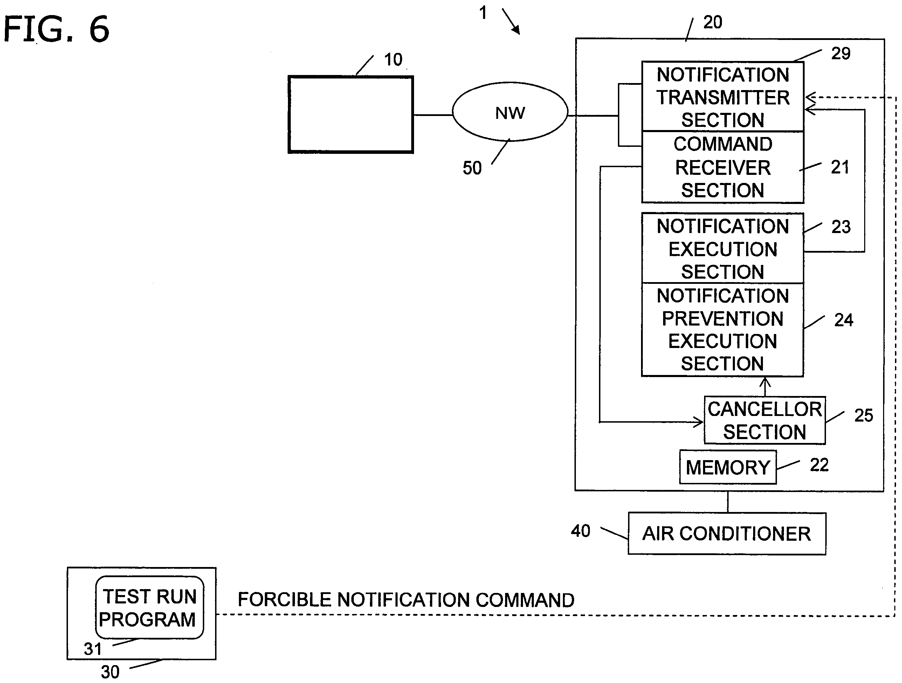

In the foregoing exemplary embodiment, the adaptor device 20 is configured to be in the notification allowance state as the initial state (i.e., at the time of installation of the adaptor device 20). Instead of this, the adaptor device 20 may be configured to be in the notification prevention state as the initial state, as illustrated in FIG 6.

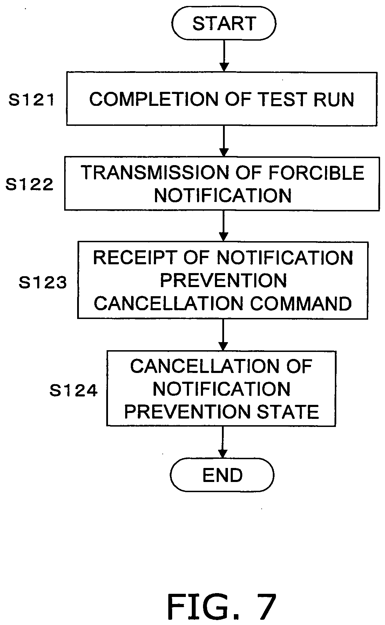

FIG. 7 shows a flow of processing to be executed by the adaptor device 20 according to modification 2.

Step S121: A test run is completed. In this case, the test-run program installed in the PC 30 is configured to access the management apparatus 10 through the PC 30. Accordingly, registration processing is executed for the air conditioner 40 in the same way as the foregoing exemplary embodiment. After the registration processing is completed, the test-run program gives the adaptor device 20 a command to transmit a forcible notification.

Step S122: The adaptor device 20, being in the notification prevention state, forcibly transmits the notification to the management apparatus 10 from the notification transmitter section 29 in response to the forcible notification transmission command issued when the test run is completed in Step S121.

Step S123: The command receiver section 21 of the adaptor device 20 receives the notification prevention cancellation command from the management apparatus 10. It should be noted that the contents of the processing Steps S122 and S123 to be executed by the management apparatus 10 are the same as those shown in FIGS.2 and 3 of the foregoing exemplary embodiment or those shown in FIGS.4 and 5 of the modification 1.

Step S124: When the command receiver section 21 receives the command in Step S123, the canceller section 25 of the adaptor device 20 causes the notification prevention executer section 24 to cancel the notification prevention state. Accordingly, the notification executer section 23 is allowed to transmit the notification, and transmits the notification through the notification transmitter section 29.

Note the foregoing processing is only an example, and therefore the processing steps are not limited to the above.

The present modification can also achieve the same advantageous effects as those described in the foregoing exemplary embodiment.

### 2.3. Other Modifications

### 2.3.1.

In the foregoing exemplary embodiment, the air conditioner 40 has been exemplified as a target apparatus for attaching the adaptor device 20. However, the target apparatus is not limited to an air conditioner. For example, any suitable apparatuses may be the target apparatus as long as they are equipment apparatuses and function as nodes of the network.

### 2.3.2.

In the foregoing exemplary embodiment, the adaptor device 20 has been exemplified. However, the adaptor device of the present invention is not limited to the above. For example, any suitable devices may be used as long as they can be attached or connected to the equipment apparatuses.

### 2.3.4.

In the foregoing exemplary embodiment, the adaptor device 20 is provided with the canceller section 25 and the timer 26 and is configured to cancel the notification prevention state when a predetermined period of time is elapsed. However the adaptor device 20 is not necessarily provided with these sections. Alternatively, the adaptor device 20 may be configured to keep the notification prevention state until the test run is completed.

### 2.3.5

In the foregoing exemplary embodiment and the foregoing modifications, the command transmitter section 19 of the management apparatus 10 is configured to transmit a command to the adaptor device 20 as a response to the notification from the adaptor device 20. However, the present invention is not limited to this configuration. For example, the management apparatus 10 may send a connection request to the adaptor device 20 and then transmit a command. Further, the cancellation command may be transmitted when the adaptor device 20 obtains a control file from the management apparatus 10 during running of the test-run program.

### INDUSTRIAL APPLICABILITY

The present invention has an advantageous effect of reducing network traffic in the equipment apparatus management system. The present invention is therefore useful as a device for an equipment apparatus, a management apparatus, an equipment apparatus management system and a method for controlling communication between an equipment apparatus and a management apparatus.

## Claims

1. A management apparatus (10) configured to manage a plurality of equipment apparatuses (40) through a network, comprising:
a notification receiver section (11) configured to receive a notification from each of the equipment apparatuses (40);
a storage section (12) configured to store a plurality of sets of identification information of the respective equipment apparatuses (40) and a plurality of sets of registration information of the respective equipment apparatuses (40) for indicating a registered/unregistered status of each of the equipment apparatuses (40);
a registration determiner section (13) configured to determine the registered/unregistered status of each of the respective equipment apparatuses (40) with reference to a corresponding set of the identification information and a corresponding set of the registration information when the notification receiver section receives the notification;
a notification prevention command creator section (14) configured to create a notification prevention command when the registration determiner section has determined that each of the equipment apparatuses (40) has the unregistered status; and
a command transmitter section (19) configured to transmit the notification prevention command to each of the equipment apparatuses (40).

2. The management apparatus according to claim 1, further comprising:
a second storage section (12) configured to store a plurality of sets of notification prevention information of the respective equipment apparatuses (40) for indicating whether or not each of the equipment apparatuses (40) is in a notification prevention state, and
a notification prevention state determiner section (15) configured to determine whether or not each of the equipment apparatuses (40) is in the notification prevention state with reference to a corresponding set of the notification prevention information and update the corresponding set of the notification prevention information based on a result of the determination.

3. The management apparatus according to claim 1, further comprising:
a cancellation command creator section (16) configured to create a cancellation command for cancelling the notification prevention state of each of the equipment apparatuses (40) when the notification receiver section (11) receives a second notification, and
wherein the command transmitter section (19) is configured to transmit the cancellation command to each of the equipment apparatuses (40).

4. The management apparatus according to claim 2, further comprising:
a cancellation command creator section (16) configured to create a cancellation command for cancelling the notification prevention state of each of the equipment apparatuses (40) when the registration determiner section (13) has determined that each of the equipment apparatuses (40) has the registered status and simultaneously when the notification prevention state determiner section (15) has determined that each of the equipment apparatuses (40) is in the notification prevention state, and
wherein the command transmitter section (19) is configured to transmit the cancellation command to each of the equipment apparatuses (40).

5. A device (20) connected to one of the plurality of equipment apparatuses (40) and configured to communicate with the management apparatus (10) according to one of the claims 1 to 4 through a network (50), the device (20) comprising:
a command receiver section (21) configured to receive a command from the management apparatus (10);
a notification transmitter section (29) configured to transmit a notification to the management apparatus (10) at a predetermined time interval; and
a notification prevention executer section (24) configured to prevent the notification transmitter section from transmitting the notification to the management apparatus (10) in response to the command.

6. The device for an equipment apparatus according to claim 5, further comprising:
a notification prevention canceller section (25) configured to cancel a state of the notification prevention executed by the notification prevention executer section (24) when a predetermined period of time is elapsed.

7. A device (20) connected to one of the plurality of equipment apparatuses (40) and configured to communicate with the management apparatus (10) according to one of the claims 1 to 4 through a network (50), the device (20) comprising:
a command receiver section (21) configured to receive a command from the management apparatus (10);
a notification prevention executer section (24) configured to prevent a notification from being transmitted to the management apparatus (10);
a notification prevention canceller section (25) configured to cancel a notification prevention state executed by the notification prevention executer section (24) in response to the command; and
a notification transmitter section (29) configured to transmit the notification to the management apparatus (10).

8. The device for an equipment apparatus according to one of claims 5 and 7,
wherein the command receiver section (21) is configured to receive a command from a test-run program (31) for each of the equipment apparatuses (40), and
the notification transmitter section (29) is configured to forcibly transmit a second notification to the management apparatus (10) in response to the command from the test-run program (31).

9. An equipment apparatus management system (1), comprising:
the device (20) according to one of claims 5 and 7;
the management apparatus (10) according to claims 1-4) configured to communicate with the device (20) through a network (50);
the equipment apparatus (40) connected to the device (20); and
the network (50).

10. A communication control method for controlling communication between a management apparatus (10) configured to manage a plurality of equipment apparatuses (40) through a network (50) and a plurality of devices (20) connected to the equipment apparatuses (40) and configured to communicate with the management apparatus (10), the communication control method comprising:
a notification transmission step in which each of the devices (20) transmits a notification to the management apparatus (10) at a predetermined time interval;
a notification receipt step in which the management apparatus (10) receives the notification from each of the devices (20) ;
a registration determination step in which the management apparatus (10) determines a registered/unregistered status of each of the equipment apparatuses (40) with reference to a plurality of sets of preliminarily stored identification information of the respective equipment apparatuses (40) and a plurality of sets of preliminarily stored registration information of the respective equipment apparatuses (40) for indicating the registered/unregistered status of each of the equipment apparatuses (40) when the management apparatus (10) receives the notification;
a notification prevention command creation step in which the management apparatus (10) creates a notification prevention command when the management apparatus (10) has determined that each of the equipment apparatuses (40) has the unregistered status;
a command transmission step in which the management apparatus (10) transmits the notification prevention command to each of the devices (20) ;
a command receipt step in which each of the devices (20) receives the notification prevention command from the management apparatus (10); and
a notification prevention step in which each of the devices (20) prevents transmission of the notification when each of the devices (20) receives the notification prevention command.

## Patentansprüche

1. Verwaltungsvorrichtung (10) zur Verwaltung einer Vielzahl von Gerätevorrichtungen (40) über ein Netzwerk, umfassend:
einen Benachrichtigung-Empfangsabschnitt (11) zum Empfang einer Benachrichtigung von jeder der Gerätevorrichtungen (40);
einen Speicherabschnitt (12) zum Speichern einer Vielzahl von Sätzen von Identifikationsinformation der jeweiligen Gerätevorrichtungen (40) und einer Vielzahl von Sätzen von Registrierungsinformation der jeweiligen Gerätevorrichtungen (40), um einen Registriert/Nicht-registriert-Status von jeder der Gerätevorrichtungen (40) anzuzeigen;
einen Registrierung-Bestimmungsabschnitt (13) zum Bestimmen des Registriert/Nicht-registriert-Status von jeder der jeweiligen Gerätevorrichtungen (40), unter Bezugnahme auf einen entsprechenden Satz der Identifikationsinformation und einem entsprechenden Satz der Registrierungsinformation , wenn der Benachrichtigung-Empfangsabschnitt die Benachrichtigung empfängt;
einen Benachrichtigungsverhinderungsbefehl-Erstellungsabschnitt (14) zum Erstellen eines Benachrichtigungsverhinderungsbefehls, wenn der Registrierung-Bestimmungsabschnitt bestimmt hat, dass jede der Gerätevorrichtungen (40) den Nicht-registriert-Status hat; und
einen Befehl-Übertragungsabschnitt (19) zum Übertragen des Benachrichtigungsverhinderungsbefehls an jede der Gerätevorrichtungen (40).

2. Verwaltungsvorrichtung nach Anspruch 1, ferner umfassend:
einen zweiten Speicherabschnitt (12) zum Speichern einer Vielzahl von Sätzen von Benachrichtigungsverhinderungsinformation der jeweiligen Gerätevorrichtungen (40), um anzuzeigen, ob sich jede der Gerätevorrichtungen (40) in einem Benachrichtigungsverhinderungszustand befindet oder nicht, und
einen Benachrichtigungsverhinderungszustand-Bestimmungsabschnitt (15) zum Bestimmen, unter Bezugnahme auf einen entsprechenden Satz der Benachrichtigungsverhinderungsinformation, ob sich jede der Gerätevorrichtungen (40) in dem Benachrichtigungsverhinderungszustand befindet oder nicht, und um den entsprechenden Satz der Benachrichtigungsverhinderungsinformation basierend auf einem Ergebnis der Bestimmung zu aktualisieren.

3. Verwaltungsvorrichtung nach Anspruch 1, ferner umfassend:
einen Löschbefehl-Erstellungsabschnitt (16) zum Erstellen eines Löschbefehls zum Löschen des Benachrichtigungsverhinderungszustands von jeder der Gerätevorrichtungen (40), wenn der Benachrichtigung-Empfangsabschnitt (11) eine zweite Benachrichtigung empfängt, und
wobei der Befehl-Übertragungsabschnitt (19) zum Übertragen des Löschbefehls an jede der Gerätevorrichtungen (40) eingerichtet ist.

4. Verwaltungsvorrichtung nach Anspruch 2, ferner umfassend:
einen Löschbefehl-Erstellungsabschnitt (16) zum Erstellen eines Löschbefehls zum Löschen des Benachrichtigungsverhinderungszustands von jeder der Gerätevorrichtungen (40), wenn der Registrierung-Bestimmungsabschnitt (13) bestimmt hat, dass jede der Gerätevorrichtungen (40) den Registriert-Status aufweist, und wenn gleichzeitig der Benachrichtigungsverhinderungszustand-Bestimmungsabschnitt (15) bestimmt hat, dass sich jede der Gerätevorrichtungen (40) im Benachrichtigungsverhinderungszustand befindet, und
wobei der Befehl-Übertragungsabschnitt (19) zur Übertragung des Löschbefehls an jede der Gerätevorrichtungen (40) eingerichtet ist.

5. Vorrichtung (20), die mit einer von der Vielzahl von Gerätevorrichtungen (40) verbunden ist und zum Kommunizieren mit der Verwaltungsvorrichtung (10) nach einem der Ansprüche 1 bis 4 über ein Netzwerk (50) eingerichtet ist, wobei die Vorrichtung (20) umfasst:
einen Befehl-Empfangsabschnitt (21) zum Empfangen eines Befehls von der Verwaltungsvorrichtung (10);
einen Benachrichtigung-Übertragungsabschnitt (29) zum Übertragen einer Benachrichtigung an die Verwaltungsvorrichtung (10) in einem vorgegebenen Zeitintervall; und
einen Benachrichtigung-Verhinderungsabschnitt (24) zum Hindern des Benachrichtigung-Übertragungsabschnitts, die Benachrichtigung als Reaktion auf den Befehl an die Verwaltungsvorrichtung (10) zu übertragen.

6. Vorrichtung für eine Gerätevorrichtung nach Anspruch 5, ferner umfassend:
einen Benachrichtigungsverhinderung-Löschungsabschnitt (25) zum Löschen eines Zustands der Benachrichtigungsverhinderung, der von dem Benachrichtigung-Verhinderungsabschnitt (24) ausgeführt wird, wenn eine vorgegebene Zeitspanne verstrichen ist.

7. Vorrichtung (20), die mit einer der Vielzahl von Gerätevorrichtungen (40) verbunden ist, und zum Kommunizieren mit der Verwaltungsvorrichtung (10) nach einem der Ansprüche 1 bis 4 über ein Netzwerk (50), wobei die Vorrichtung (20) umfasst:
einen Befehl-Empfangsabschnitt (21) zum Empfangen eines Befehls von der Verwaltungsvorrichtung (10);
einen Benachrichtigung-Verhinderungsabschnitt (24) zum Verhindern einer Übertragung einer Benachrichtigung an die Verwaltungsvorrichtung (10);
einen Benachrichtigungsverhinderung-Löschungsabschnitt (25) zum Löschen eines Benachrichtigungsverhinderungszustands, der von dem Benachrichtigung-Verhinderungsabschnitt (24) als Reaktion auf den Befehl ausgeführt wird; und
einen Benachrichtigung-Übertragungsabschnitt (29) zum Übertragen der Benachrichtigung an die Verwaltungsvorrichtung (10).

8. Vorrichtung für eine Gerätevorrichtung nach einem der Ansprüche 5 und 7,
wobei der Befehl-Empfangsabschnitt (21) zum Empfangen eines Befehls von einem Testlaufprogramm (31) für jede der Gerätevorrichtungen (40) eingerichtet ist, und
wobei der Benachrichtigung-Übertragungsabschnitt (29) zum zwangsweisen Übertragen einer zweiten Benachrichtigung an die Verwaltungsvorrichtung (10) als Reaktion auf den Befehl vom Testlaufprogramm (31).

9. Gerätevorrichtung-Verwaltungssystem (1), umfassend:
die Vorrichtung (20) nach einem der Ansprüche 5 und 7;
die Verwaltungsvorrichtung (10) nach den Ansprüchen 1-4 zum Kommunizieren mit der Vorrichtung (20) über ein Netzwerk (50);
die mit der Vorrichtung (20) verbundene Gerätevorrichtung (40); und
das Netzwerk (50).

10. Kommunikationssteuerverfahren zur Steuerung der Kommunikation zwischen einer Verwaltungsvorrichtung (10) zum Verwalten einer Vielzahl von Gerätevorrichtungen (40) über ein Netzwerk (50) und einer Vielzahl von Vorrichtungen (20), die mit den Gerätevorrichtungen (40) verbunden sind, zum Kommunizieren mit der Verwaltungsvorrichtung (10), wobei das Kommunikationssteuerverfahren umfasst:
einen Benachrichtigung-Übertragungsschritt, bei dem jede der Vorrichtungen (20) eine Benachrichtigung an die Verwaltungsvorrichtung (10) in einem vorgegebenen Zeitintervall überträgt;
einen Benachrichtigung-Empfangsschritt, bei dem die Verwaltungsvorrichtung (10) die Benachrichtigung von jeder der Vorrichtungen (20) empfängt;
einen Registrierung-Bestimmungsschritt, bei dem die Verwaltungsvorrichtung (10) einen Registriert/Nicht-registriert-Status von jeder der Gerätevorrichtungen (40) unter Bezugnahme auf eine Vielzahl von Sätzen von vorläufig gespeicherter Identifikationsinformation der jeweiligen Gerätevorrichtungen (40) und eine Vielzahl von Sätzen von vorläufig gespeicherter Registrierungsinformation der jeweiligen Gerätevorrichtungen (40) bestimmt, um den Registriert/Nicht-registriert-Status von jeder der Gerätevorrichtungen (40) anzuzeigen, wenn die Verwaltungsvorrichtung (10) die Benachrichtigung empfängt;
einen Benachrichtigungsverhinderungsbefehl-Erstellungsschritt, bei dem die Verwaltungsvorrichtung (10) einen Benachrichtigungsverhinderungsbefehl erstellt, wenn die Verwaltungsvorrichtung (10) bestimmt hat, dass jede der Gerätevorrichtungen (40) den Nicht-registriert-Status aufweist;
einen Befehl-Übertragungsschritt, bei dem die Verwaltungsvorrichtung (10) den Benachrichtigungsverhinderungsbefehl an jede der Vorrichtungen (20) überträgt;
einen Befehl-Empfangsschritt, bei dem jede der Vorrichtungen (20) den Benachrichtigungsverhinderungsbefehl von der Verwaltungsvorrichtung (10) empfängt; und
einen Benachrichtigung-Verhinderungsschritt, bei dem jede der Vorrichtungen (20) die Übertragung der Benachrichtigung verhindert, wenn jede der Vorrichtungen (20) den Benachrichtigungsverhinderungsbefehl empfängt.

## Revendications

1. Un appareil de gestion (10) configuré pour assurer la gestion d'une pluralité d'appareils d'équipements (40) par le biais d'un réseau et composé des éléments suivants :
une section à récepteur de notification (11) configurée pour recevoir une notification en provenance de chacun des appareils d'équipements (40)
une section de stockage (12) configurée pour stocker une pluralité de séries d'informations d'identification des appareils respectifs d'équipements (40) et une pluralité de séries d'informations d'inscription des différents appareils respectifs d'équipements (40) dans le but d'indiquer un état inscrit/pas inscrit pour chacun de ces appareils d'équipements (40)
une section à déterminateur d'inscription (13) configurée pour déterminer l'état inscrit/pas inscrit de chacun des appareils respectifs d'équipements (40) en se référant à une série correspondante d'informations d'identification et une sérié correspondante d'informations d'inscription lorsque la section à récepteur de notification reçoit la notification
une section à créateur de commande de prévention de notification (14) configurée pour transmettre une commande de prévention de notification lorsque la section à déterminateur d'inscription a déterminé que chacun des appareils d'équipements (40) a l'état non-inscrit et
une section à transmetteur de commande (19) configurée pour transmettre la commande de prévention de notification à chacun des appareils d'équipements (40).

2. L'appareil de gestion que décrit la revendication 1, si ce n'est qu'il comporte, en outre, les éléments suivants :
une deuxième section de stockage (12) configurée pour stocker une pluralité d'informations de prévention de notification des appareils respectifs d'équipements (40) afin d'indiquer si chacun des appareils d'équipements (40) est oui ou non à un état de prévention de notification et
une section à déterminateur d'état de prévention de notification (15) configurée pour déterminer si oui ou non chacun des appareils d'équipements (40) est à l'état de prévention de notification en se référant à une série correspondante d'informations de prévention de notification et pour mettre à jour la série correspondante des informations de prévention de notification, en se basant sur un résultat de cette détermination.

3. L'appareil de gestion que décrit la revendication 1, si ce n'est qu'il comporte, en outre, les éléments suivants :
une section à créateur de commande d'annulation (16) configurée pour créer une commande d'annulation afin d'annuler l'état de prévention de notification de chacun des appareils d'équipements (40) lorsque la section à récepteur de notification (11) reçoit une deuxième notification et
si ce n'est que la section à transmetteur de commande (19) est configurée pour transmettre la commande d'annulation à chacun des appareils d'équipements (40).

4. L'appareil de gestion que décrit la revendication 2, si ce n'est qu'il comporte, en outre, les éléments suivants :
une section à créateur de commande d'annulation (16) configurée pour créer une commande d'annulation afin d'annuler l'état de prévention d'annulation de chacun des appareils d'équipements (40) lorsque la section à déterminateur d'inscription (13) a déterminé que chacun des appareils d'équipements (40) a l'état inscrit et, simultanément, lorsque la section à déterminateur de l'état de prévention de notification (15) a déterminé que chacun des appareils d'équipements (40) a l'état de prévention de notification et
si ce n'est que la section à transmetteur de commande (19) est configurée pour transmettre la commande d'annulation à chacun des appareils d'équipements (40).

5. Un dispositif (20) raccordé à un élément d'une pluralité d'appareils d'équipements (40) et configuré pour communiquer avec l'appareil de gestion (10) conformément à l'une des revendications 1 à 4 par le biais d'un réseau (50) et ce dispositif (20) comporte :
une section à récepteur de commande (21) configurée pour recevoir une commande en provenance de l'appareil de gestion (10)
une section à transmetteur de notification (29) configurée pour transmettre une notification à l'appareil de gestion (10) à un intervalle prédéterminé de temps et
une section à exécuteur de prévention de notification (24) configurée pour empêcher la transmission de la notification à l'appareil de gestion (10) par la section à transmetteur de notification en réponse à la commande.

6. Le dispositif pour un appareil d'équipement que décrit la revendication 5, si ce n'est qu'il comporte, en outre :
une section à suppresseur de prévention de notification (25) configurée pour annuler un état de la prévention de notification exécuté par la section à exécuteur de prévention de notification (24) lorsqu'une période prédéterminée de temps s'est écoulée.

7. Un dispositif (20) raccordé à un élément de la pluralité d'appareils d'équipements (40) et configuré pour communiquer avec l'appareil de gestion (10) comme le décrit l'une des revendications 1 à 4 par le biais d'un réseau (50) et ce dispositif (20) se compose des éléments suivants :
une section à récepteur de commande (21) configurée pour recevoir une commande en provenance de l'appareil de gestion (10)
une section à exécuteur de prévention de notification (24) configurée pour empêcher la transmission d'une notification à l'appareil de gestion (10)
une section à suppresseur de prévention de notification (25) configurée pour annuler un état de la prévention de notification exécutée par la section à exécuteur de prévention de notification (24) en réponse à la commande et
une section à transmetteur de notification (29) configurée pour transmettre la notification à l'appareil de gestion (10).

8. Le dispositif pour un appareil d'équipement que décrit l'une ou l'autre des revendications 5 et 7,
si ce n'est que la section à récepteur de commande (21) est configurée pour recevoir une commande en provenance d'un programme d'exécution de test (31) pour chacun des appareils d'équipements (40) et
si ce n'est que la section à transmetteur de notification (29) est configurée pour transmettre, de force, une deuxième notification à l'appareil de gestion (10) en réponse à la commande en provenance du programme d'exécution de test (31).

9. Un système de gestion d'appareils d'équipement (1) composé des éléments suivants :
le dispositif (20) que décrit l'une des revendications 5 et 7
l'appareil de gestion (10) que décrivent les revendications 1 à 4 configuré pour communiquer avec le dispositif (20) par le biais d'un réseau (50)
l'appareil d'équipement (40) raccordé au dispositif (20) et
le réseau (50).

10. Un procédé de commande de communication permettant de contrôler les communications entre un appareil de gestion (10) configuré pour gérer une pluralité d'appareils d'équipements (40) par le biais d'un réseau (50) et une pluralité de dispositifs (20) raccordés aux appareils d'équipements (40) et configurés pour communiquer avec l'appareil de gestion (10) et ce procédé de commande de communication se compose des éléments suivants :
une étape de transmission de notification durant laquelle chacun des dispositifs (20) transmet une notification à l'appareil de gestion (10) à un intervalle prédéterminé de temps
une étape de réception de notification durant laquelle l'appareil de gestion (10) reçoit la notification en provenance de chacun des dispositifs (20)
une étape de détermination d'inscription durant laquelle l'appareil de gestion (10) détermine un état inscrit/non-inscrit pour chacun des appareils d'équipements (40) en se référant à une pluralité de séries d'informations d'identification mémorisées à l'avance pour les appareils respectifs d'équipements (40) et une pluralité de séries d'informations d'inscription mémorisées à l'avance pour les appareils respectifs d'équipements (40) afin d'indiquer l'état inscrit/non-inscrit de chacun des appareils d'équipements (40) lorsque l'appareil de gestion (10) reçoit cette notification
une étape de création de commande de prévention de notification durant laquelle l'appareil de gestion (10) crée une commande de prévention de notification lorsque l'appareil de gestion (10) a déterminé que chacun des appareils d'équipements (40) a l'état inscrit
une étape de transmission de commande durant laquelle l'appareil de gestion (10) transmet la commande de prévention de notification à chacun des dispositifs (20)
une étape de réception de commande durant laquelle chacun des dispositifs (20) reçoit la commande de prévention de notification en provenance de l'appareil de gestion (10) et
une étape de prévention de notification durant laquelle chacun des dispositifs (20) empêche la transmission de la notification lorsque chacun des dispositifs (20) reçoit la commande de prévention de notification.
